# EUROPÄISCHE PATENTSCHRIFT

(11) **EP 0 662 547 B1**
(45) Veröffentlichungstag und Bekanntmachung des Hinweises auf die Patenterteilung: **04.11.1998**
(21) Anmeldenummer: 94119654.5
(22) Anmeldetag: 13.12.1994
(51) Int. Cl.: E04C 2/52, F24D 3/16

(54) **Deckenelement für eine Heiz- und Kühldecke**
A ceiling element for ceiling heating and cooling
Elément de plafond pour chauffage et refroidissement par le plafond

(30) Priorität: 05.01.1994 CH 16/94; 27.09.1994 CH 2922/94
(43) Veröffentlichungstag der Anmeldung: 12.07.1995
(73) Patentinhaber: BARCOL-AIR AG, 8712 Stäfa (CH)
(72) Erfinder: Sokolean, Helmuth, CH-8713 Uerikon (CH)
(74) Vertreter: Wagner, Wolfgang, Dr. Phil., Dipl.-Phys.

(56) Entgegenhaltungen:
- CH-A- 362 824
- CH-A- 617 999
- DE-A- 2 359 446
- DE-A- 3 331 252
- DE-U- 9 305 462
- FR-A- 760 134
- FR-A- 1 359 891

## Beschreibung

Die Erfindung betrifft ein Deckenelement für eine Heiz- und Kühldecke gemäss dem Oberbegriff des Anspruchs 1.

Es sind verschiedene Ausführungen derartiger Deckenelemente bekannt, die für Heizdecken und Kühldecken sowie Decken, die sowohl zum Heizen als auch zum Kühlen bestimmt sind, verwendet werden können. Dies geht z. B. aus H. Sokolean: "Kühldeckentechnologie zur Erreichung des bestmöglichen Raumkomforts" in Architektur und Technik 8/92, S. 49 - 53, B+L Verlags AG, Schlieren (Schweiz), hervor.

Gemäss einer ersten dort beschriebenen Ausführung ist das Deckenelement einschliesslich eines Rohres zur Leitung eines Wärmeträgermediums, meist Wasser, aus Aluminium extrudiert. Solche Deckenelemente erfüllen zwar hohe Anforderungen, was den Wärmeübergang zwischen Trägermedium und Deckenplatte betrifft, sind aber verhältnismässig aufwendig in der Herstellung. Ausserdem sind die Rohre bei Verwendung von Wasser als Wärmeträgermedium korrosionsanfällig, sodass oft ein Innenrohr aus Kupfer oder Stahl eingezogen werden muss. Dies erhöht die Material- und Herstellungskosten beträchtlich.

Gemäss einer zweiten Ausführung ist das Deckenelement einschliesslich einer wannenförmigen Aufnahme, in welche ein Kupfer- oder Stahlrohr eingelegt ist, ebenfalls aus Aluminium extrudiert. Auch hier liegen wegen des Rohres die Materialkosten hoch.

Bei einer weiteren Ausführung sind dünne Kunststoffschläuche verhältnismässig dicht auf die Oberseite der Deckenplatte aufgelegt. Hier ist ohne zusätzliche, den thermischen Kontakt verbessernde Massnahmen, die aber auch den Herstellungsaufwand erhöhen, der Wärmeübergang zwischen Kunststoffschläuchen und Deckenplatte wegen der kleinen Kontaktfläche unbefriedigend.

Aus der FR-A-760 134 ist eine Heizplatte bekannt, welche Heizungsrohre von kreissegmentförmigem Querschnitt aufweist, welche zwischen einer ebenen Frontplatte und einer mit entsprechenden Ausbuchtungen versehenen Rückwand derart gehaltert sind, dass sie mit dem ebenen Teil ihrer Oberfläche an der Frontplatte anliegen. Die Rückwand ist mit der Frontplatte verschweisst. Ein nachträgliches Einführen der Rohre ist offensichtlich nicht möglich. Die Herstellung der Heizplatte ist somit verhältnismässig aufwendig. Sie kann auch nicht nachträglich an die bestehenden Bedürfnisse angepasst werden. Die Verbindung mit Zu- und Ableitungen sowie mit weiteren Heizplatten ist wie bei allen Rohrsystemen verhältnismässig kompliziert.

Die CH-A-617 999 zeigt ein Bauelement für Flächenheizungen, bei welchem Heizungsrohre aus Kunststoff in Einsenkungen kreissegmentförmigen Querschnitts in einem dünnen Wärmeverteilungsblech, welches auf einer Wärmeisolationsschicht aufliegt, eingeschnappt sind. Abgesehen davon, dass die Bauweise nicht für ein Deckenelement geeignet wäre, schränkt auch hier die Verwendung von Rohren die Freiheit in der Verlegung der Leitungen und die Leichtigkeit der Verbindung mit weiteren Bauelementen ein. Der Querschnitt des Rohres ist nicht deformiert, ein gewisser mit der Wärmedehnung schwankender Anpressdruck wird allenfalls durch eine leichte elastische Deformation des Wärmeverteilungsblechs erzeugt.

Der Erfindung liegt die Aufgabe zu Grunde, ein Deckenelement der genannten Art zu schaffen, welches einfach und kostengünstig herstellbar ist, insbesondere keine teuren Materialien erfordert und dabei guten Wärmetransport zwischen dem Wärmeträgermedium und der Deckenplatte gewährleistet.

Diese Aufgabe wird durch die Erfindung, wie sie in den Ansprüchen gekennzeichnet ist, gelöst. Die durch die Erfindung erzielten Vorteile liegen neben der billigen Herstellung und dem hohen Wirkungsgrad des Deckenelements sowie der Vermeidung von Korrosionsproblemen, wie sie bei Verwendung von unsachgemäss behandeltem Wasser als Wärmeträgermedium auftreten können, auch darin, dass es sehr einfach anzuschliessen und mit benachbarten Deckenelementen gleicher oder unterschiedlicher Bauart zu verbinden ist.

Im folgenden wird die Erfindung anhand von Figuren, welche lediglich Ausführungsbeispiele darstellen, näher erläutert. Es zeigen
- Fig. 1a: einen Querschnitt entsprechend A-A in Fig. 1b durch ein erfindungsgemässes Deckenelement gemäss einer ersten Ausführungsform,
- Fig. 1b: eine Draufsicht auf das Deckenelement von Fig. 1a,
- Fig. 2a: einen Querschnitt entsprechend A-A in Fig. 2b durch ein erfindungsgemässes Deckenelement gemäss einer zweiten Ausführungsform,
- Fig. 2b: eine Draufsicht auf das Deckenelement von Fig. 2a,
- Fig. 3: einen Querschnitt durch ein erfindungsgemässes Deckenelement gemäss einer dritten Ausführungsform,
- Fig. 4: einen Querschnitt durch ein erfindungsgemässes Deckenelement gemäss einer vierten Ausführungsform,
- Fig. 5: einen Querschnitt durch ein erfindungsgemässes Deckenelement gemäss einer fünften Ausführungsform,
- Fig. 6a: einen Querschnitt entsprechend A-A in Fig. 6b durch ein erfindungsgemässes Deckenelement gemäss einer sechsten Ausführungsform,
- Fig. 6b: eine Draufsicht auf das Deckenelement von Fig. 6a,
- Fig. 7: einen Querschnitt durch ein erfindungsgemässes Deckenelement gemäss einer siebten Ausführungsform,
- Fig. 8: einen Querschnitt durch ein erfindungsgemässes Deckenelement gemäss einer achten Ausführungsform,
- Fig. 9: einen Querschnitt durch ein erfindungsgemässes Deckenelement gemäss einer neunten Ausführungsform,
- Fig. 10: einen Querschnitt durch ein erfindungsgemässes Deckenelement gemäss einer zehnten Ausführungsform,
- Fig. 11a: einen Querschnitt entsprechend A-A in Fig. 11b durch den Randbereich eines erfindungsgemässen Deckelenelements gemäss einer elften Ausführungsform und
- Fig. 11b: eine Draufsicht auf den Eckbereich des Deckenelements von Fig. 11a.

Alle Deckenelemente weisen jeweils eine rechteckige Deckenplatte 1 auf sowie einen Schlauch 2 zur Leitung eines Wärmeträgermediums auf, der in einer geraden Führung, welche mit der Deckenplatte 1 in engem thermischem Kontakt steht, in Längsrichtung geführt ist.

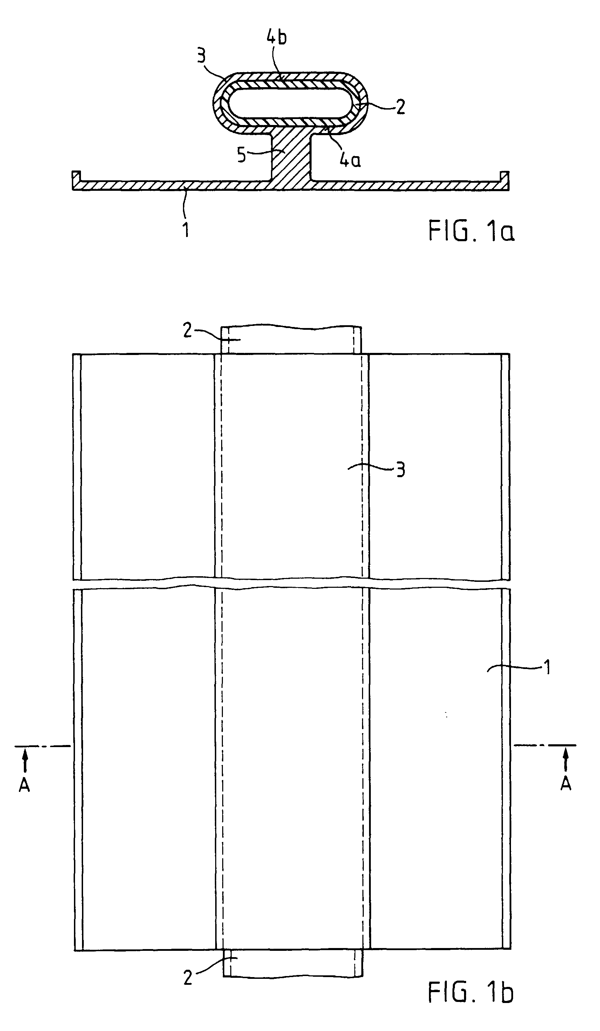

Bei der ersten Ausführungsform (Fig. 1a, 1b) ist die Führung als von einem Rohr 3 gebildeter geschlossener Kanal ausgebildet, dessen Querschnitt oval ist, wobei die Längswände parallele, ebene Kontaktwände 4a,b bilden, die parallel zur Deckenplatte 1 verlaufen. Das Rohr 3 ist mit der Deckenplatte 1 durch einen Steg 5 verbunden, der guten thermischen Kontakt sicherstellt. Da das Rohr 3 untergreifbar ist, ist das Deckenelement bequem montierbar. Die Deckenplatte 1, der Steg 5 und das Rohr 3 sind einstückig aus Aluminium extrudiert. Der Schlauch 2 wird nachträglich eingeführt.

Der Schlauch 2, der in entspanntem Zustand runden Querschnitt aufweist und vorzugsweise aus einem mindestens zwischen 10°C und 60°C beständigen und elastischen Kunststoff, am besten Polyurethan oder Polybutylen, besteht, ist zwischen den Kontaktwänden 4a,b geklemmt und dadurch elastisch deformiert. Er drückt daher gegen die Kontaktwände 4a,b, was jeweils über die ganze Fläche guten Kontakt und entsprechend guten Wärmeübergang gewährleistet. Der Schlauch 2 berührt auch mit dem verbleibenden Teil seiner Oberfläche die Innenfläche des Rohrs 3, sodass der Wärmeübergang zwischen Schlauch und Rohr optimal ist.

Da ein Schlauch durch die Führungen mehrerer Deckenelemente und über dieselben hinaus zu Anschlüssen von Zu- und Ableitungen gezogen werden kann, sind keine komplizierten und für Undichtigkeiten anfälligen Anschlüsse an den Deckenelementen erforderlich. Die Montage wird beträchtlich vereinfacht.

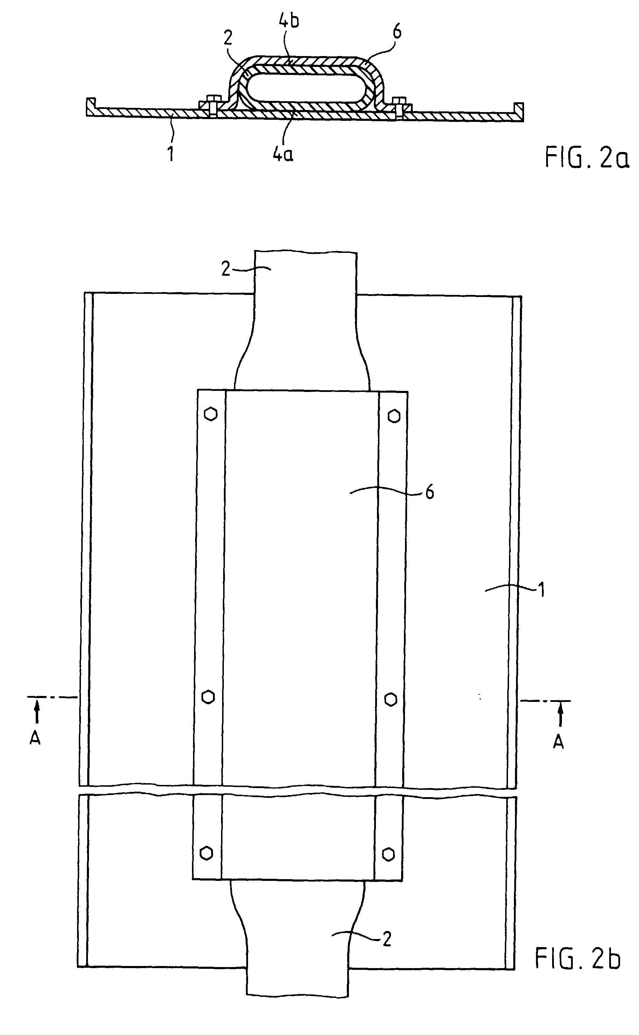

Bei der zweiten Ausführungsform (Fig. 2a, 2b) wird der Kanal, in welchem der Schlauch 2 geführt ist, durch einen Streifen der Oberseite der Deckenplatte 1 sowie durch eine Führungslasche 6 gebildet, welche beidseits des Schlauchs 2 mit der Deckenplatte 1 verschraubt ist. Der besagte Streifen sowie die Unterseite der Führungslasche 6 bilden die Kontaktwände 4a,b, zwischen denen der Schlauch 2 geklemmt ist. Der thermische Kontakt zwischen dem Schlauch 2 und der Deckenplatte 1 ist hier durch den direkten Kontakt optimal und wird durch die Führungslasche 6, welche den Schlauch 2 ganz einschliesst und mit der Deckenplatte 1 in engem thermischem Kontakt steht, noch verbessert.

Die Führungslasche 6 erstreckt sich nicht über die volle Länge des Deckenelements, was das Einziehen des Schlauchs 2 erleichtert.

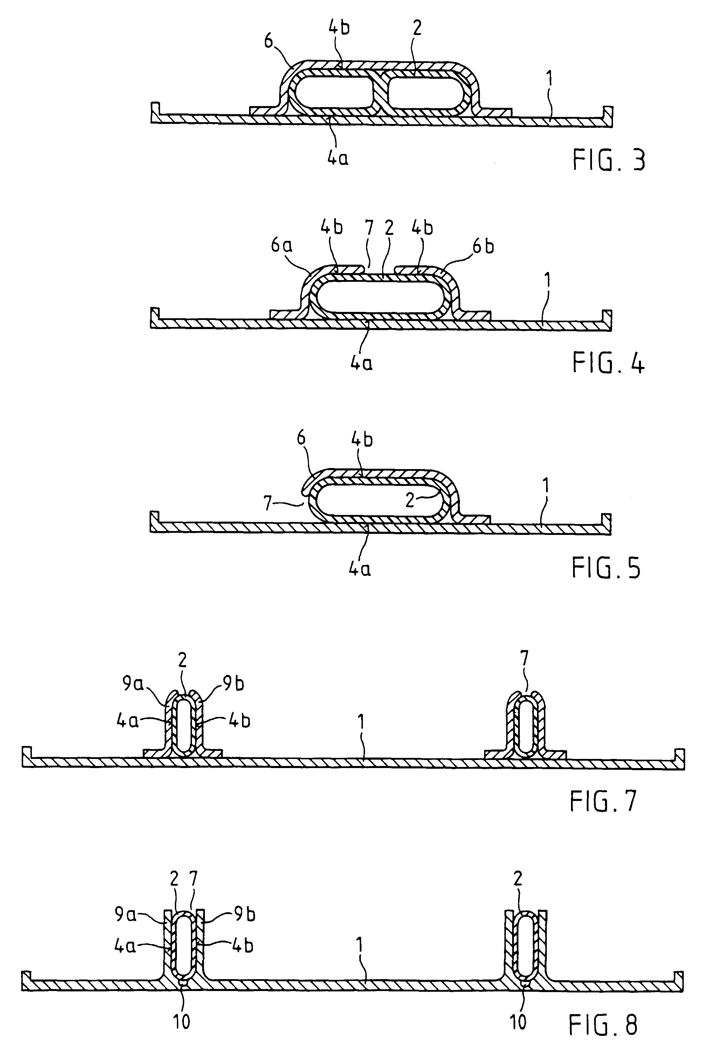

Die dritte Ausführungsform (Fig. 3) entspricht im wesentlichen der zweiten. Der Kanal ist etwas breiter und der Schlauch 2 ist als Doppelschlauch ausgebildet, dessen Teile ausserhalb des Kanals getrennt und zu verschiedenen Anschlüssen gezogen werden können, von denen der eine mit einem Kühlaggregat, der andere mit einem Heizaggregat verbunden ist. Statt eines Doppelschlauchs können natürlich auch zwei einfache Schläuche vorgesehen sein, welche in einem oder auch in zwei etwa durch eine Zwischenwand getrennten Kanälen geführt sind.

Bei der vierten Ausführungsform (Fig. 4) ist die Führung als oben offene Nut ausgebildet mit in der Mitte einem Schlitz 7, der zwischen zwei gleichen und symmetrisch angeordneten, den Schlauch 2 jeweils teilweise übergreifenden Führungslaschen 6a,b frei bleibt. Der Schlitz 7 ist so dimensioniert, dass der Schlauch in seitlich zusammengedrücktem Zustand durch den Schlitz in die Nut gedrückt werden kann, deren Form er sich dann anpasst. Der Wärmeübergang wird durch den Schlitz 7 gewöhnlich nur geringfügig beeinträchtigt, die Einführung des Schlauchs 2 jedoch wesentlich erleichtert.

Die fünfte Ausführungsform (Fig. 5) stellt eine Abwandlung der vierten dar, bei welcher die Führungslasche 6 den Schlauch 2 fast ganz übergreift, sodass der Schlitz 7 seitlich zwischen dem Rand der Führungslasche 6 und der Deckenplatte 1 gebildet wird.

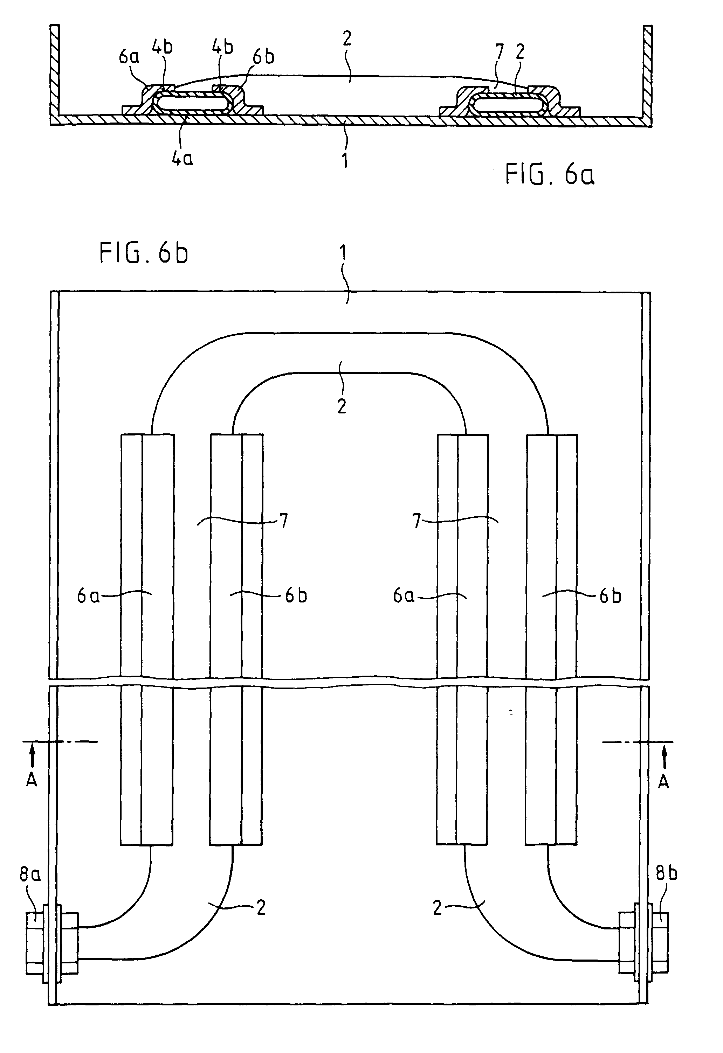

Bei der sechsten Ausführungsform (Fig. 6a, 6b) sind zwei parallele Führungen vorgesehen, die jeweils als von zwei Führungslaschen 6a,b gebildete Nuten ausgebildet sind, ähnlich wie bei der vierten Ausführungsform. Die Führungen erstrecken sich nicht über die ganze Länge des Deckenelements, sodass der Schlauch 2 nicht nur sehr bequem eingezogen, sondern auch flexibel geführt werden kann. Er kann, wie dargestellt, hintereinander durch die beiden Führungen laufen und beidseits zu Anschlüssen 8a,b, die z. B. als Schottverschraubungen ausgebildet sein können, gezogen sein. Er kann jedoch bei geringem lokalem Heiz- und Kühlbedarf auch nur durch eine Führung laufen und ein- oder beidseitg zum benachbarten Deckenelement durchgezogen sein.

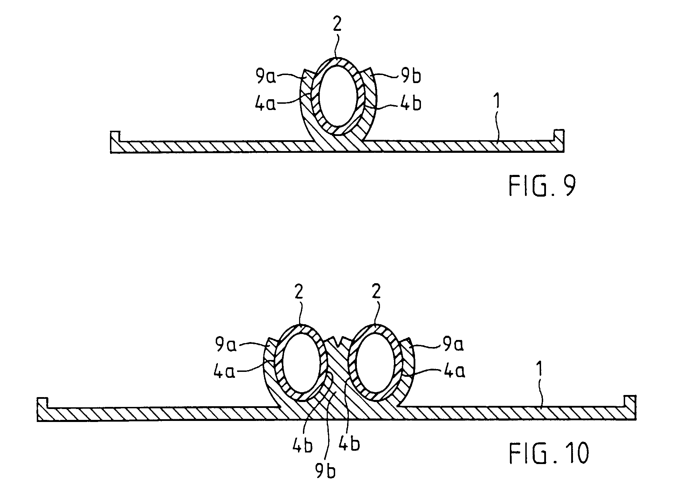

Bei einer ähnlichen siebten Ausführungsform (Fig. 7) sind die Nuten schmal und tief und werden jeweils von parallelen Führungsstegen 9a,b gebildet, deren einander zugewandte Seitenflächen zur Deckenplatte 1 senkrechte Kontaktflächen 4a,b bilden. Der Schlitz 7 ist annähernd gleich breit wie die Nut - die Stege 9a,b sind am oberen Ende leicht nach innen gebogen -, so dass der Schlauch 2 besonders leicht eingezogen werden kann. Trotzdem ist der Schlauch 2 fast vollständig umschlossen, sodass der thermische Kontakt mit der Deckenplatte 1 sehr gut ist.

Die achte Ausführung (Fig. 8) entspricht fast vollständig der siebten. Die Nuten erstrecken sich über die ganze Länge des einstückig extrudierten Deckenelements und sind am unteren Ende gerundet, sodass der Schlauch 2 auch dort im wesentlichen satt anliegt. Im übrigen sind die Führungsstege 9a,b gerade, sodass der Schlitz 7 so breit ist wie die Nut. Auf dem Grund einer Nut ist jeweils eine durchgehende Entlüftungsrille 10 angebracht, welche sicherstellt, dass sich nicht zwischen dem Schlauch 2 und Teilen der Kontaktflächen 4a,b ein Luftpolster bilden kann, das den Wärmeübergang behindert. Derartige Entlüftungsrillen können auch bei anderen Ausführungen vorgesehen werden.

Die neunte Ausführungsform (Fig. 9) zeigt eine Nut elliptischen Querschnitts, die von zwei mit der Deckenplatte 1 koextrudierten Führungsstegen 9a,b gebildet wird.

Die zehnte Ausführungsform (Fig. 10) zeigt eine Doppelnut. Die beiden unmittelbar nebeneinander verlaufenden Nuten weisen elliptischen Querschnitt auf und werden von zwei äusseren Führungsstegen 9a und einem mittleren Führungssteg 9b gebildet.

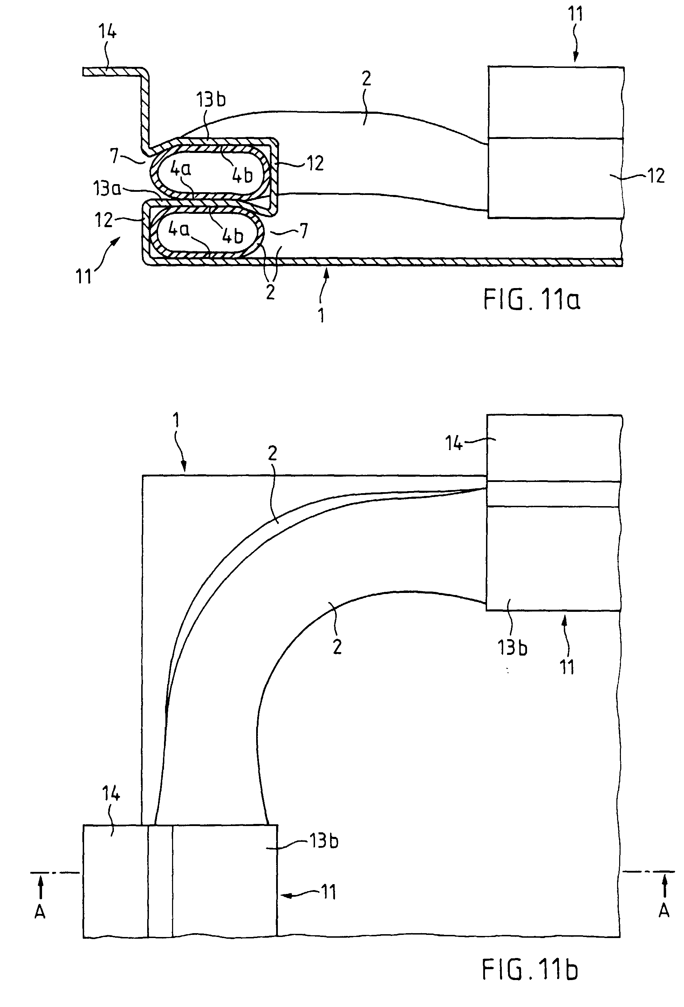

Die elfte Ausführungsform (Fig. 11a, 11b) schliesslich zeichnet sich besonders dadurch aus, dass sie sehr einfach und billig herstellbar ist. Die rechteckige Deckenplatte 1 weist einen umlaufenden, in den Eckbereichen unterbrochenen Flansch 11 auf, der auf sehr einfache und kostensparende Weise durch Umbiegen von Fortsätzen der aus Blech, vorzugsweise Stahlblech gestanzten Deckenplatte 1 hergestellt ist. An den Rand der Deckenplatte 1 anschliessend weist der Flansch 11 einen nach oben abgebogenen vertikalen Verbindungsstreifen 12 auf, an welchen, nach innen abgebogen, ein erster horizontaler Kontaktstreifen 13a anschliesst. Am Innenrand desselben schliesst ein weiterer nach oben abgebogener vertikaler Verbindungsstreifen 12 an und an diesen, nach aussen abgebogen, ein zweiter Kontaktstreifen 13b. Am Aussenrand desselben schliesst, wiederum über einen vertikalen Verbindungsstreifen, ein nach aussen abstehender Flanschstreifen 14 an.

Ein Randstreifen der Oberseite der Deckenplatte 1 und die Unterseite des ersten Kontaktstreifens 13a bilden Kontaktwände 4a, 4b, zwischen denen der Schlauch 2 geklemmt ist, desgleichen die Oberseite des ersten Kontaktstreifens 13a und die Unterseite des zweiten Kontaktstreifens 13b. Damit der Schlauch 2 sicher festgehalten wird, sind der Innenrand des ersten Kontaktstreifens 13a und der Aussenrand des zweiten Kontaktstreifens 13b etwas nach unten gezogen. Es bleibt jedoch jeweils ein Schlitz 7 offen, durch den der Schlauch eingeführt werden kann.

Das beschriebene Deckenelement kann sehr flexibel eingesetzt werden, da Schlauchzuführungen oder -anschlüsse in jeder der Ecken möglich sind. So können an den verschiedenen Seiten eines Deckenelements je nach voraussehbarem örtlichem Bedarf zwei Schläuche oder nur einer oder auch gar keiner geführt werden. Es können zwei verschiedene Schläuche eingesetzt oder auch ein Schlauch zwei Mal um das Deckenelement geführt werden. Selbstverständlich können auch auf der Oberfläche der Deckenplatte 1 weitere Führungen, z. B. der Art, wie sie im Zusammenhang mit den vorgängig beschriebenen Ausführungen geschildert wurden, vorgesehen werden. Varianten der Ausbildung des Flansches - mit nur einer oder mehr als zwei Führungen etc. - sind natürlich möglich.

Die gezeigten Deckenelemente können natürlich, im Rahmen der Ansprüche, in vielfacher Weise abgewandelt werden. So können Führungslaschen und - stege an die Deckenplatte angeformt, mit ihr verklebt, verschraubt oder durch Punktschweissen verbunden sein. Es können mehrere parallele oder auch anders angeordnete Führungen vorhanden sein. Als Materialien kommen neben Aluminium oder Stahlblech vor allem auch Kunststoffe in Frage. Die Abmessungen - Breite und Länge der Deckenplatte, Durchmesser und Wandstärke des Schlauchs etc. - können über weite Bereiche variieren und nach den durch die Anwendung gegebenen Anforderungen gewählt werden. Typische Werte für den Schlauch sind z. B. 12 mm Aussendurchmesser und 10 mm Innendurchmesser.

Auch der Querschnitt des Kanals, in welchem der Schlauch geführt ist, oder der entsprechenden Nut kann vielfach abgewandelt werden. Entscheidend ist, dass der Schlauch im Querschnitt derart deformiert wird, dass ein grösserer Teil seiner Aussenfläche gegen Kontaktwände drückt, welche im übrigen auch nicht eben zu sein brauchen, sondern etwa leicht konkav sein können.

Das Andrücken des Schlauchs kann dabei auch dadurch erzielt oder unterstützt werden, dass das Wärmeträgermedium unter einem leichten statischen Ueberdruck von z. B. 1 bar gehalten wird, was bei den meisten Anlagen ohnehin der Fall ist. Der Schlauch tendiert unter dem Einfluss des Ueberdrucks gegen einen runden Querschnitt und wird, wenn die Führung ihn daran hindert, diese Form anzunehmen, deformiert und mindestens ein Teil seiner Oberfläche gegen deren Wände gedrückt. Dies ist auch dann der Fall, wenn der Schlauch nicht elastisch ist oder wenn seine Elastizität unter der dauernden Deformation nachgelassen hat.

## Patentansprüche

1. Deckenelement für eine Heiz- und Kühldecke mit einer Deckenplatte (1) und einer an der Deckenplatte (1) geführten Leitung für ein Wärmeträgermedium, **dadurch gekennzeichnet**, **dass** die Leitung durch einen Schlauch (2) aus biegsamem Material gebildet wird und an der Oberseite der Deckenplatte (1) mindestens eine Führung zur Aufnahme des Schlauches (2) vorgesehen ist, in welcher derselbe mit deformiertem Querschnitt geführt ist.

2. Deckenelement nach Anspruch 1, **dadurch gekennzeichnet**, **dass** die Führung zwei einander gegenüberliegende parallele Kontaktwände (4a, 4b) aufweist, zwischen denen der Schlauch (2) geklemmt ist.

3. Deckenelement nach Anspruch 1 oder 2, **dadurch gekennzeichnet, dass** die Führung als geschlossener Kanal ausgebildet ist.

4. Deckenelement nach Anspruch 1 oder 2, **dadurch gekennzeichnet, dass** die Führung als Nut mit einem zur Einführung des Schlauchs (2) geeigneten Schlitz (7) ausgebildet ist.

5. Deckenelement nach einem der Ansprüche 2 bis 4, **dadurch gekennzeichnet**, **dass** die Kontaktwände (4a, 4b) zur Deckenplatte (1) parallel sind.

6. Deckenelement nach Anspruch 5, **dadurch gekennzeichnet, dass** eine Kontaktwand (4a) durch einen Streifen der Oberseite der Deckenplatte (1) gebildet wird.

7. Deckenelement nach Anspruch 6, **dadurch gekennzeichnet**, **dass** die weitere Kontaktwand (4b) durch die Unterseite einer Führungslasche (6) gebildet wird, die, von der Oberseite der Deckenplatte (1) ausgehend, den Schlauch (2) ganz oder teilweise umfasst.

8. Deckenelement nach Anspruch 6, **dadurch gekennzeichnet, dass** die weitere Kontaktwand (4b) durch die Unterseiten zweier Führungslaschen (6a, 6b) gebildet wird, die, beidseits des Schlauchs (2) von der Oberseite der Deckenplatte (1) ausgehend, den Schlauch (2) ganz oder teilweise umfassen.

9. Deckenelement nach einem der Ansprüche 2 bis 4, **dadurch gekennzeichnet, dass** die Kontaktwände (4a, 4b) zur Deckenplatte (1) senkrecht sind.

10. Deckenelement nach Anspruch 9, **dadurch gekennzeichnet, dass** die Kontaktwände (4a, 4b) von den einander zugewandten Seitenflächen zweier paralleler Führungsstege (9a, 9b) gebildet werden.

11. Deckenelement nach einem der Ansprüche 1 bis 10, **dadurch gekennzeichnet, dass** es mehrere parallele Führungen aufweist.

12. Deckenelement nach einem der Ansprüche 1 bis 11, **dadurch gekennzeichnet, dass** die Deckenplatte (1) mindestens an einem Teil ihres Randes einen nach oben abgebogenen Flansch (11) aufweist, welcher mindestens eine Kontaktwand (4a, 4b) bildet, an welcher der Schlauch (2) anliegt.

13. Deckenelement nach Anspruch 12, **dadurch gekennzeichnet, dass** der Flansch (11) mindestens einen ersten, in Gebrauchstellung, horizontalen Kontaktstreifen (13a) aufweist, der mindestens einseitig eine Kontaktwand (4a, 4b) bildet.

14. Deckenelement nach Anspruch 13, **dadurch gekennzeichnet, dass** der Flansch (11) einen vom Rand der Deckenplatte (1) nach oben abgebogenen Verbindungsstreifen (12) aufweist, an welchen nach innen abgebogen der erste Kontaktstreifen (13a) anschliesst.

15. Deckenelement nach Anspruch 13 oder 14, **dadurch gekennzeichnet, dass** der Flansch (11) mindestens einen zweiten horizontalen Kontaktstreifen (13b) aufweist, welcher eine Kontaktwand (4b) bildet, die einer vom ersten Kontaktstreifen (13a) gebildeten Kontaktwand (4a) gegenüberliegt, wobei der Schlauch (2) zwischen den beiden Kontaktwänden (4a, 4b) geklemmt ist.

16. Deckenelement nach den Ansprüchen 14 und 15, **dadurch gekennzeichnet, dass** der Flansch (11) einen vom Innenrand des ersten Kontaktstreifens (13a) nach oben abgebogenen Verbindungsstreifen (12) aufweist, an welchen nach aussen abgebogen der zweite Kontaktstreifen (13b) anschliesst.

17. Deckenelement nach einem der Ansprüche 13 bis 16, **dadurch gekennzeichnet, dass** die Unterseite des ersten Kontaktstreifens (13a) und ein Randstreifen der Oberseite der Deckenplatte (1) einander gegenüberliegende Kontaktwände (4a, 4b) bilden, zwischen denen der Schlauch (2) geklemmt ist.

18. Deckenelement nach einem der Ansprüche 12 bis 17, **dadurch gekennzeichnet, dass** die Deckenplatte (1) polygonal, vorzugsweise rechteckig, ist und der Flansch (11) mindestens im Bereich der Ecken unterbrochen ist.

19. Deckenelement nach einem der Ansprüche 1 bis 18, **dadurch gekennzeichnet, dass** die Deckenplatte (1) und die Führung oder Führungen aus Aluminium bestehen.

20. Deckenelement nach einem der Ansprüche 1 bis 18, **dadurch gekennzeichnet, dass** die Deckenplatte (1) und die Führung oder Führungen aus Stahlblech bestehen.

21. Deckenelement nach einem der Ansprüche 1 bis 20, **dadurch gekennzeichnet, dass** der Schlauch (2) aus elastischem Material besteht.

22. Deckenelement nach Anspruch 20, **dadurch gekennzeichnet, dass** der Schlauch (2) mindestens überwiegend aus elastischem Kunststoff besteht.

23. Deckenelement nach Anspruch 22, **dadurch gekennzeichnet, dass** der Schlauch (2) mindestens überwiegend aus Polyurethan besteht.

24. Deckenelement nach Anspruch 22, **dadurch gekennzeichnet, dass** der Schlauch (2) mindestens überwiegend aus Polybutylen besteht.

25. Verfahren zum Betrieb eines Deckenelements nach einem der Ansprüche 1 bis 24, **dadurch gekennzeichnet, dass** das den Schlauch (2) durchströmende Wärmeträgermedium unter Ueberdruck gehalten wird.

## Claims

1. Ceiling element for a heating and cooling ceiling, having a ceiling panel (1) and a line which is guided on the ceiling panel (1) and is intended for a heat transfer medium, **characterized in that** the line is formed by a hose (2) consisting of a flexible material, and at least one guide is provided on the upper side of the ceiling panel (1), which guide is intended for receiving the hose (2) and in which said hose is guided with a deformed cross-section.

2. Ceiling element according to Claim 1, **characterized in that** the guide exhibits two mutually opposite parallel contact walls (4a, 4b), between which the hose (2) is clamped.

3. Ceiling element according to Claim 1 or 2, **characterized in that** the guide is designed as a closed duct.

4. Ceiling element according to Claim 1 or 2, **characterized in that** the guide is designed as a groove having a slit (7) which is suitable for the introduction of the hose (2).

5. Ceiling element according to one of Claims 2 to 4, **characterized in that** the contact walls (4a, 4b) are parallel to the ceiling panel (1).

6. Ceiling element according to Claim 5, **characterized in that** one contact wall (4a) is formed by a strip of the upper side of the ceiling panel (1).

7. Ceiling panel according to Claim 6, **characterized in that** the further contact wall (4b) is formed by the underside of a guide plate (6) which, starting from the upper side of the ceiling panel (1), encloses the hose (2) in whole or in part.

8. Ceiling element according to Claim 6, **characterized in that** the further contact wall (4b) is formed by the undersides of two guide plates (6a, 6b) which, starting on both sides of the hose (2) from the upper side of the ceiling panel (1), enclose the hose (2) in whole or in part.

9. Ceiling element according to one of Claims 2 to 4, **characterized in that** the contact walls (4a, 4b) are perpendicular with respect to the ceiling panel (1).

10. Ceiling element according to Claim 9, **characterized in that** the contact walls (4a, 4b) are formed by the mutually facing side surfaces of two parallel guide webs (9a, 9b).

11. Ceiling element according to one of Claims 1 to 10, **characterized in that** it exhibits a plurality of parallel guides.

12. Ceiling element according to one of Claims 1 to 11, **characterized in that**, at least on part of its border, the ceiling panel (1) exhibits an upwardly bent-off flange (11) which forms at least one contact wall (4a, 4b) against which the hose (2) butts.

13. Ceiling element according to Claim 12, **characterized in that** the flange (11) exhibits at least one first contact strip (13a) which is horizontal in the position for use and forms a contact wall (4a, 4b) on at least one side.

14. Ceiling element according to Claim 13, **characterized in that** the flange (11) exhibits a joining strip (12) which is bent off upwards from the border of the ceiling panel (1) and which is adjoined by the first contact strip (13a), the latter being bent off inwards.

15. Ceiling element according to Claim 13 or 14, **characterized in that** the flange (11) exhibits at least one second horizontal contact strip (13b) which forms a contact wall (4b) which is located opposite a contact wall (4a) formed by the first contact strip (13a), the hose (2) being clamped between the two contact walls (4a, 4b).

16. Ceiling element according to Claims 14 and 15, **characterized in that** the flange (11) exhibits a joining strip (12) which is bent off upwards from the inner border of the first contact strip (13a) and is adjoined by the second contact strip (13b), the latter being bent off outwards.

17. Ceiling element according to one of Claims 13 to 16, **characterized in that** the underside of the first contact strip (13a) and a border strip of the upper side of the ceiling panel (1) form mutually opposite contact walls (4a, 4b), between which the hose (2) is clamped.

18. Ceiling element according to one of Claims 12 to 17, **characterized in that** the ceiling panel (1) is polygonal, preferably rectangular, and the flange (11) is interrupted at least in the region of the corners.

19. Ceiling element according to one of Claims 1 to 18, **characterized in that** the ceiling panel (1) and the guide or guides consist of aluminium.

20. Ceiling element according to one of Claims 1 to 18, **characterized in that** the ceiling panel (1) and the guide or guides consist of sheet steel.

21. Ceiling element according to one of Claims 1 to 20, **characterized in that** the hose (2) consists of an elastic material.

22. Ceiling element according to Claim 20, **characterized in that** the hose (2) consists at least predominantly of an elastic plastic.

23. Ceiling element according to Claim 22, **characterized in that** the hose (2) consists at least predominantly of polyurethane.

24. Ceiling element according to Claim 22, **characterized in that** the hose (2) consists at least predominantly of polybutylene.

25. Method of using a ceiling element according to one of Claims 1 to 24, **characterized in that** the heat transfer medium flowing through the hose (2) is kept under superatmospheric pressure.

## Revendications

1. Elément de plafond pour chauffage et refroidissement par le plafond avec un élément de plafond (1) et une conduite guidée sur l'élément de plafond (1) destinée à un fluide caloporteur, **caractérisé en ce que** la conduite se présente sous la forme d'un flexible (2) en matériau souple et que du côté supérieur de l'élément de plafond (1) il est prévu au moins un guidage destiné à recevoir le flexible (2), guidage dans lequel ledit flexible est conduit avec une section déformée.

2. Elément de plafond selon la revendication 1, **caractérisé en ce que** le guidage présente deux parois de contact (4a, 4b) parallèles opposées entre lesquelles est bloqué le flexible (2).

3. Elément de plafond selon la revendication 1 ou 2, **caractérisé en ce que** le guidage forme un canal fermé.

4. Elément de plafond selon la revendication 1 ou 2, **caractérisé en ce que** le guidage se présente sous forme d'une rainure avec une fente (7) destinée à l'introduction du flexible (2).

5. Elément de plafond selon l'une des revendications 2 à 4, **caractérisé en ce que** les parois de contact (4a, 4b) sont parallèles à l'élément de plafond (1).

6. Elément de plafond selon la revendication 5, **caractérisé en ce qu**'une paroi de contact (4a) est formée par une bande de la face supérieure de l'élément de plafond (1).

7. Elément de plafond selon la revendication 6, **caractérisé en ce que** l'autre paroi de contact (4b) est formée par la face inférieure d'un collier de guidage (6) qui, en partant de la face supérieure de l'élément de plafond (1), entoure le flexible (2) entièrement ou partiellement.

8. Elément de plafond selon la revendication 6, **caractérisé en ce que** l'autre paroi de contact (4b) est formée par les faces inférieures de deux colliers de guidage (6a, 6b) qui, partant des deux côtés du flexible (2) depuis la face supérieure de l'élément de plafond (1), entourent le flexible (2) entièrement ou partiellement.

9. Elément de plafond selon l'une des revendications 2 à 4, **caractérisé en ce que** les parois de contact (4a, 4b) sont verticales par rapport à l'élément de plafond (1).

10. Elément de plafond selon la revendication 9, **caractérisé en ce que** les parois de contact (4a, 4b) sont formées par les faces latérales opposées de deux nervures de guidage parallèles (9a, 9b).

11. Elément de plafond selon l'une des revendications 1 à 10, **caractérisé en ce qu**'il présente plusieurs guidages parallèles.

12. Elément de plafond selon l'une des revendications 1 à 11, **caractérisé en ce que** l'élément de plafond (1) présente au moins sur une partie de sa bordure une bride (11) repliée vers le haut, bride qui forme au moins une paroi de contact (4a, 4b) sur laquelle s'appuie le flexible (2).

13. Elément de plafond selon la revendication 12, **caractérisé en ce que** la bride (11) présente au moins, en position d'utilisation, une première bande de contact horizontale (13a) qui forme au moins une paroi de contact (4a, 4b) d'un côté.

14. Elément de plafond selon la revendication 13, **caractérisé en ce que** la bride (11) présente une bande de liaison (12) repliée vers le haut depuis le bord de l'élément de plafond (1), bande suivie de la première bande de contact (13a) repliée vers l'intérieur.

15. Elément de plafond selon la revendication 13 ou 14, **caractérisé en ce que** la bride (11) présente au moins une deuxième bande de contact horizontale (13b) qui forme une paroi de contact (4b) située en face d'une paroi de contact (4a) formée par la première bande de contact (13a), le flexible (2) étant bloqué entre les deux parois de contact (4a, 4b).

16. Elément de plafond selon les revendications 14 et 15, **caractérisé en ce que** la bride (11) présente une bande de liaison (12) repliée vers le haut depuis le bord intérieur de la première bande de contact (13a), bande de liaison suivie de la deuxième bande de contact (13b) repliée vers l'extérieur.

17. Elément de plafond selon l'une des revendications 13 à 16, **caractérisé en ce que** la face inférieure de la première bande de contact (13a) et une bande de bordure de la face supérieure de l'élément de plafond (1) forment les parois de contact (4a, 4b) opposées entre lesquelles est bloqué le flexible (2).

18. Elément de plafond selon l'une des revendications 12 à 17, **caractérisé en ce que** l'élément de plafond (1) se présente sous une forme polygonale, de préférence rectangulaire, et que la bride (11) est interrompue au moins au niveau des angles.

19. Elément de plafond selon l'une des revendications 1 à 18, **caractérisé en ce que** l'élément de plafond (1) et le ou les guidages sont en aluminium.

20. Elément de plafond selon l'une des revendications 1 à 18, **caractérisé en ce que** l'élément de plafond (1) et le ou les guidages sont en tôle d'acier.

21. Elément de plafond selon l'une des revendications 1 à 20, **caractérisé en ce que** le flexible (2) est en matériau élastique.

22. Elément de plafond selon la revendication 20, **caractérisé en ce que** le flexible (2) est composé au moins en grande partie de matériau plastique élastique.

23. Elément de plafond selon la revendication 22, **caractérisé en ce que** le flexible (2) est composé au moins en grande partie de polyuréthane.

24. Elément de plafond selon la revendication 22, **caractérisé en ce que** le flexible (2) est composé au moins en grande partie de polybutylène.

25. Procédé d'exploitation d'un élément de plafond selon l'une des revendications 1 à 24, **caractérisé en ce que** le fluide caloporteur traversant le flexible (2) est maintenu en surpression.
